# EUROPÄISCHE PATENTSCHRIFT

(11) **EP 2 842 409 B1**
(45) Veröffentlichungstag und Bekanntmachung des Hinweises auf die Patenterteilung: **15.03.2017**
(21) Anmeldenummer: 14177919.9
(22) Anmeldetag: 22.07.2014
(51) Int. Cl.: A01D 61/00, A01D 69/00, B65G 15/52

(54) **Schrägförderer einer Erntemaschine**
Inclined conveyor for a harvesting machine
Convoyeur incliné d'une moissonneuse

(30) Priorität: 03.09.2013 DE 102013109579
(43) Veröffentlichungstag der Anmeldung: 04.03.2015
(73) Patentinhaber: CLAAS Selbstfahrende Erntemaschinen GmbH, 33428 Harsewinkel (DE)
(72) Erfinder: Bühlmeier, Robert, 33442 Herzebrock-Clarholz (DE)

(56) Entgegenhaltungen:
- EP-A1- 1 366 651
- DE-A1-102004 036 183
- US-A- 4 430 847

## Beschreibung

Die Erfindung betrifft gemäß dem Oberbegriff des Patentanspruchs 1 einen Schrägförderer einer Erntemaschine mit zumindest zwei endlos ausgebildeten, parallel zueinander verlaufenden Treibriemen, die zumindest zwei zueinander beabstandete, in einem Schrägförderergehäuse drehbar gelagerte Wellen umschlingen und zwischen denen parallel zu den Wellen verlaufende, an jedem der Treibriemen befestigte Förderleisten angeordnet sind, wobei die eine Welle als Antriebswelle ausgebildet und für jeden der Antriebsriemen mit Antriebsrädern versehen ist, welche gemeinsam ein Antriebssystem des Schrägförderers bilden, das den Schrägförderer in einer Förderrichtung antreibt und ein Antriebsdrehmoment auf die zumindest zwei Treibriemen überträgt.

Schrägförderer werden vorzugweise in selbstfahrenden Mähdreschern verwendet und dienen in diesen zur Förderung des von einem Erntevorsatz aufgenommenen Erntegutes in eine Dresch- und Trenneinrichtung. Wenn der Erntevorsatz beispielsweise als Schneidwerk ausgebildet ist, so nimmt eine Schneidwerksmulde einen Querförderer auf, welcher das Halmgut von beiden Seiten her zur Mitte fördert und über eine Öffnung in einer Rückwand der Schneidwerksmulde an den Schrägförderer übergibt. Zu diesem Zweck ist der Querförderer an seinem Außenmantel mit gegenläufigen Schnecken versehen. Natürlich kann das Erntegut auch über eine Pick-up aufgenommen und dem Schrägförderer zugeführt werden. Darüber hinaus werden Schrägförderer auch in anderen Bauarten von Erntemaschinen verwendet, die beispielsweise zur Ernte von Knollen- oder Wurzelfrüchten verwendet werden.

Als Schrägförderer werden bislang primär Kettenförderer verwendet, die aus zwei parallel zueinander verlaufenden Rollenketten mit zwischen diesen angeordneten Förderleisten bestehen. Dieser Kettenförderer ist innerhalb eines Schrägförderergehäuses angeordnet, das einerseits mit dem Erntevorsatz gekuppelt und andererseits schwenkbar am Mähdrescher geführt ist. Dabei weist das Schrägförderergehäuse eine Breite auf, die im Wesentlichen der Breite der nachfolgenden Dresch- und Trenneinrichtung entspricht. Somit liegt der gesamte Schrägförderer innerhalb der durch die Antriebsräder des Mähdreschers gebildeten Spur.
Dabei ist es ein Ziel, Mähdrescher mit einer möglichst hohen Flächenleistung zu betreiben, wobei auf einen entsprechend höheren Erntegutdurchsatz, der beispielsweise aus einer Steigerung der Arbeitsbreite des Erntevorsatzes resultiert, nicht nur die jeweiligen Vorrichtungen der Dresch- und Trenneinrichtung, der Reinigungseinrichtung und der Restkornabscheidung ausgelegt sein müssen, denn das gemähte Halmgut muss auch störungsfrei vom Schrägförderer gefördert werden. Dabei können auch erhebliche Unterschiede hinsichtlich der Art und der Beschaffenheit des Halmgutes auftreten. Es kann sich um Halmgutarten mit sehr unterschiedlicher Länge und Eigenschaften der Stängel handeln. Beispielsweise werden mit einem Mähdrescher neben sämtlichen Getreidearten auch beispielsweise Raps, Grassamen, Leinsamen, Soja, Bohnen oder Erbsen geerntet. Weiterhin kann die Feuchtigkeit des Halmgutes unterschiedlich sein, wodurch sich auch die Eigenschaften von dessen Stängelanteilen wesentlich verändern. Problematisch für die Funktion des Schrägförderers sind auch Steine oder Fremdkörper, die eventuell mit dem Halmgut aufgenommen werden und den Schrägförderer blockieren und/oder beschädigen.

Der Schrägförderer, der das Halmgut unterschlächtig, also auf einer Bodenwand des Schrägförderergehäuses fördert, muss dabei stets dazu in der Lage sein, die vom Querförderer übergebene Halmgutmenge störungsfrei in die Dresch- und Trenneinrichtung zu fördern, wobei das Halmgut beschleunigt und in einem möglichst dünnschichtigen Strom gleichmäßig der Drescheinrichtung zugeführt werden soll.

Ein Schrägförderer einer Erntemaschine der im Oberbegriff des Patentanspruchs 1 angegebenen Gattung ist aus der DE 10 2009 036 104 B4 bekannt. Die beiden endlosen Zugmittel sind in diesem Fall als Treibriemen aus gewebelagenverstärktem, vernetztem Polymer ausgebildet. Jeder dieser Treibriemen weist an seiner Innenseite, die als Lauffläche dient, eine Verzahnung auf, die mit Mitnehmern der Antriebsräder und der Umlenkräder des Schrägförderers formschlüssig zusammenwirken. Die Mitnehmer sind dabei als am Umfang der Räder auf diesen fixierte Bolzen ausgebildet, die achsparallel verlaufen und jeweils in die Lücken zwischen den Zähnen eingreifen.

Aus der DE 10 2004 036 183 A1 ist ein Schrägförderer gemäß dem Oberbegriff des
Anspruches 1 bekannt.

Aus der US 4,430,847 A ist es bekannt, einen Schrägförderer eines Mähdreschers reversierend anzutreiben, um Verstopfungen durch Erntegutansammlungen im Schrägförderer zu beseitigen. Hierzu wird der für das Antreiben von Schrägförderer und daran angebrachtem Vorsatzgerät an dem Mähdrescher angeordnete Riemenantrieb in seiner Drehrichtung umgekehrt.

Es ist Aufgabe der vorliegenden Erfindung, einen mit Treibriemen versehenen Schrägförderer derart auszubilden, dass eine eventuell innerhalb des Schrägförderergehäuses auftretende Verstopfung mit Bestandteilen des Erntegutes problemlos beseitigt werden kann.

Diese Aufgabe wird, ausgehend vom Oberbegriff des Patentanspruchs 1, durch dessen kennzeichnende Merkmale gelöst. Danach soll das Antriebssystem in einen Reversierbetrieb umsteuerbar sein, wobei in diesem Reversierbetrieb über eine Einrichtung das von den Antriebsrädern auf die Treibriemen übertragene Antriebsdrehmoment erhöht wird. Da es, wie bereits dargelegt, sehr unterschiedliche Arten von Halmgütern gibt, die sich auch in unterschiedlichen Zuständen befinden können, besteht das Risiko, dass im Förderkanal des Schrägförderers Verstopfungen auftreten.

Mit unterschiedlichen Zuständen des Halmgutes ist dabei auch gemeint, dass es sich um Halmgut mit einer großen Halmlänge, um feuchtes Halmgut, um Lagergetreide oder um ein Halmgut mit einem hohen Anteil von Unkräutern handeln kann. Einer Verstopfung des Förderkanals geht zumeist das Problem voraus, dass sich Teile des Halmguts oder der Unkräuter um die dem Erntevorsatz zugewandte Umlenkwelle oder um die die dem Dreschwerk zugewandte Antriebswelle wickeln, so dass eine gleichmäßige Durchströmung des Förderkanals nicht mehr möglich ist und dieser sich auf Dauer zusetzt. Es kann dabei eine Blockade des Schrägförderers eintreten, die nur mit großem Aufwand gelöst werden kann. Zu diesem Zweck muss bei einem Mähdrescher der Erntevorsatz vom Schrägförderer getrennt werden.

Erfindungsgemäß soll im Falle einer derartigen Störung der Schrägförderer mit umgekehrter Drehrichtung, also im Reversierbetrieb, angetrieben werden, so dass das Halmgut aus dem Förderkanal in Richtung des Erntevorsatzes herausgefördert wird und sich die die Antriebswelle und die Umlenkwelle umwickelnden Halmgutbestandteile von diesen lösen. Wenn, wie im vorliegenden Fall vorgesehen, die Fördermittel des Schrägförderers aus Treibriemen und an diesen befestigten Förderleisten bestehen, so kann im Reversierbetrieb der jeweilige Treibriemen aber auf seinem Antriebsrad durchrutschen, so dass eine entsprechende Rückförderung des Halmguts verhindert wird. Im Übrigen besteht das Risiko, dass beim Durchrutschen eines der Treibriemen und einer gleichzeitigen Bewegung des anderen Treibriemens eine Schrägstellung der Förderleisten zustande kommt.

Um diese Probleme zu vermeiden ist eine Einrichtung vorgesehen, die im Reversierbetrieb das von den Antriebsrädern auf die Treibriemen übertragende Antriebsdrehmoment erhöht, d. h., es wird ein Durchrutschen des jeweiligen Treibriemens an der oder den Kontaktflächen des diesem zugeordneten Antriebsrades verhindert. Dadurch ist gewährleistet, dass im Reversierbetrieb stets die Förderelemente des Schrägförderers entsprechend angetrieben werden können.

Demgegenüber ist nach der DE 10 2009 036 104 B4 kein Reversierbetrieb des Schrägförderers vorgesehen. Bei der Ausbildung des Schrägförderers nach dieser Druckschrift ist im Übrigen nachteilig, dass sowohl die auf der Antriebswelle angeordneten Antriebsräder als auch die auf der Umlenkwelle angeordneten Umlenkräder aus Nabenscheiben bestehen, von denen konzentrisch angeordnete, achsparallel verlaufende Bolzen ausgehen, die in die jeweilige Verzahnung der Treibriemen eingreifen. Diese Bolzen stellen, was das Aufwickeln des Halmguts an der Welle anbelangt, ein zusätzliches Problem dar. Die von den rotierenden Naben ausgehenden Bolzen erfassen nämlich das Halmgut und wickeln es um die Antriebsräder, die Umlenkräder, die Antriebswelle oder die Umlenkwelle.

In weiterer Ausgestaltung der Erfindung ist vorgesehen, die Treibriemen als Glattriemen auszubilden, wobei diese von den Antriebsrädern reibschlüssig angetrieben werden. Durch eine Ausbildung der jeweiligen Lauffläche der Treibriemen, bei der diese keine für einen formschlüssigen Eingriff der Antriebsräder und der Umlenkräder ausgebildete Oberfläche aufweisen, wird verhindert, dass der entsprechende Treibriemen mit seiner Lauffläche Teile des Halmgutes in den Antrieb fördert. Das kann nämlich bei der nach dem gattungsbildenden Stand der Technik vorgesehenen zahnartigen Profilierung der Lauffläche des entsprechenden Treibriemens der Fall sein. Diese einzelnen Zähne können bei einer entsprechend großen Halmgutmenge im Förderkanal Halme erfassen, so dass diese in den Eingriff des Antriebsrades in den Treibriemen gezogen werden. Dieses Problem kann durch die erfindungsgemäße Ausbildung der Treibriemen als Glattriemen verhindert werden.

Weiterhin können die Antriebsräder an ihrer jeweiligen Außenmantelfläche, an der die Lauffläche der entsprechende Treibriemen angreift, glatt ausgebildet sein. Mittels dieser glatten Ausbildung der Außenmantelflächen der Antriebsräder wird verhindert, dass von den Antriebsrädern Halmbestandteile ergriffen und in den Antrieb gezogen werden.

Alternativ dazu besteht die Möglichkeit, die Antriebsräder an ihrer Außenmantelfläche mit einer Profilierung zu versehen, wobei diese leicht profilierte Außenmantelfläche aber mit einer glatten Lauffläche des Treibriemens zusammenwirken soll. Die entsprechende Profilierung soll hinsichtlich ihrer Form und ihrer Tiefe derart ausgebildet sein, dass sich in dieser keine Bestandteile des Halmguts verfangen können. Eine vorteilhafte Profilierung kann beispielsweise V-förmig ausgebildet sein. Alternativ dazu besteht aber auch die Möglichkeit, die Außenmantelfläche der Antriebsräder mit einer in Achsrichtung ausgerichteten Profilierung zu versehen. Entsprechende Profilierungen können weiterhin auch an den Umlenkrädern vorgesehen sein.

Gemäß einer ersten vorteilhaften Ausgestaltung der Erfindung kann die Einrichtung zur Erhöhung des übertragbaren Antriebsdrehmoments als im Reversierbetrieb aktivierbare Mitnehmer ausgebildet sein. Danach ist an jedem Antriebsrad zumindest ein Mitnehmer vorgesehen, der während des Reversierbetriebes, also in Folge der Drehrichtungsumkehr, selbsttätig radial nach außen verlagert wird und unter Schaffung eines Formschlusses in die Lauffläche des Treibriemens eingreift. Dadurch wird im Reversierbetrieb das vom Antriebsrad auf den Treibriemen übertragbare Drehmoment deutlich erhöht, so dass das Antriebsrad nicht gegenüber dem Treibriemen durchrutschen kann. Auf die entsprechende Klinke wird im Reversierbetrieb eine in Umfangsrichtung wirkende Kraft ausgeübt, die deren Verschwenken bewirkt. Nach diesem Schwenkvorgang ragt ein Teilabschnitt der Klinke über die radiale Erstreckung des Antriebsrades vor und greift somit in die Lauffläche des Treibriemens ein.

Gemäß einer weiteren Ausgestaltung der Erfindung kann die Einrichtung zur Erhöhung des übertragbaren Antriebsdrehmoments im Reversierbetrieb als Spanneinrichtung ausgebildet sein, mit der die Riemenspannung im Reversierbetrieb gegenüber dem Betrieb in Förderrichtung erhöht wird. Wird also bei einer Verstopfung des Förderkanals ein Reversierbetrieb ausgelöst, so soll mittels einer hydraulischen oder mechanischen Spanneinrichtung für die Dauer des Reversierbetriebes, also kurzzeitig, die Riemenspannung der Treibriemen erhöht werden. Dadurch lässt sich ebenfalls erreichen, dass vom Antriebsrad ein für eine Rückförderung des Halmguts erforderliches Drehmoment vom Antriebsrad auf den Treibriemen übertragen werden kann.

Für einen entsprechenden Antrieb des Schrägförderers im normalen Förderbetrieb oder im Reversierbetrieb soll weiterhin die Antriebswelle über einen Hydromotor eines hydrostatischen Antriebes angetrieben werden. Dabei ist vorgesehen, dass der Abtrieb des Hydromotors in eine Drehrichtungsumkehr umsteuerbar ist, wofür beispielsweise innerhalb des hydrostatischen Antriebes eine Verstellpumpe verwendet werden kann, die soweit verstellbar ist, dass sich deren Förderrichtung verändert. Darüber hinaus besteht natürlich auch die Möglichkeit, die Antriebswelle über ein mechanisches Getriebe anzutreiben, innerhalb dessen eine Drehrichtungsumkehr ermöglicht wird.

Schließlich sollen die mit den Treibriemen zusammenwirkenden Riemenspanneinrichtungen als Einrichtung zur Erhöhung des Drehmoments dienen, die im Reversierbetrieb über hydraulische Riemenspanner eine Erhöhung der Riemenspannung bewirken. Dabei ist vorzugsweise an jedem Ende der Umlenkwelle oder der Antriebswelle ein hydraulischer Riemenspanner vorgesehen, und beide Riemenspanner werden über ein 2/2-Wegeventil mit einem erhöhten Druck beaufschlagt, sobald dieses vorgesteuerte Wegeventil in entsprechender Weise aktiviert wird.

Die Erfindung ist nicht auf die angegebene Kombination der Merkmale des unabhängigen Patentanspruchs 1 und der von diesem abhängigen Patentansprüche beschränkt. Es ergeben sich darüber hinaus Möglichkeiten, einzelne Merkmale, soweit sie aus den Patentansprüchen, den Vorteilsangaben zu den Patentansprüchen, der nachfolgenden Beschreibung des Ausführungsbeispiels oder zumindest aus den Zeichnungen hervorgehen, miteinander zu kombinieren. Die Bezugnahme der Patentansprüche auf die Zeichnung durch entsprechende Verwendung von Bezugszeichen soll den Schutzumfang der Patentansprüche nicht beschränken.

Zur weiteren Erläuterung der Erfindung wird auf die Zeichnung verwiesen, in der zwei Ausführungsbeispiele dargestellt sind. Es zeigen:
- Figur 1: eine schematische Schnittdarstellung einer frontseitigen Teilansicht eines selbstfahrenden Mähdreschers, in der unter anderem ein aus Treibriemen bestehender Zugmitteltrieb eines Schrägförderers sowie eine Dresch- und Trenneinrichtung sichtbar sind,
- Figur 2: eine im Rahmen des Schrägförderers nach Figur 1 verwendete Fördereinrichtung, die vier endlos ausgebildete Treibriemen und an diesen befestigte Förderleisten aufweist,
- Figur 3: eine perspektivische Darstellung eines Abschnitt eines mit einer Förderleiste versehenen Treibriemens,
- Figur 4: eine perspektivische Darstellung eines profilierten Antriebsrades,
- Figur 5: eine perspektivische Darstellung eines Antriebsrades, dessen Außenmantelfläche glatt ausgebildet ist und
- Figur 6: eine stirnseitige Ansicht eines mit einer Klinke versehenen Antriebsrades, das einen nicht näher dargestellten Treibriemen in Förderrichtung des Schrägförderers antreibt,
- Figur 7: das gemäß Figur 6 ausgebildete Antriebsrad, welches aber einen entsprechenden Treibriemen in entgegengesetzter Drehrichtung, also im Reversierbetrieb antreibt, und
- Figur 8: einen Ausschnitt aus einem Hydraulikschema, aus welchem eine Druckmittelbeaufschlagung zur Erhöhung einer Riemenspannkraft der Treibriemen mittels eines hydraulischen Riemenspanners hervorgeht.

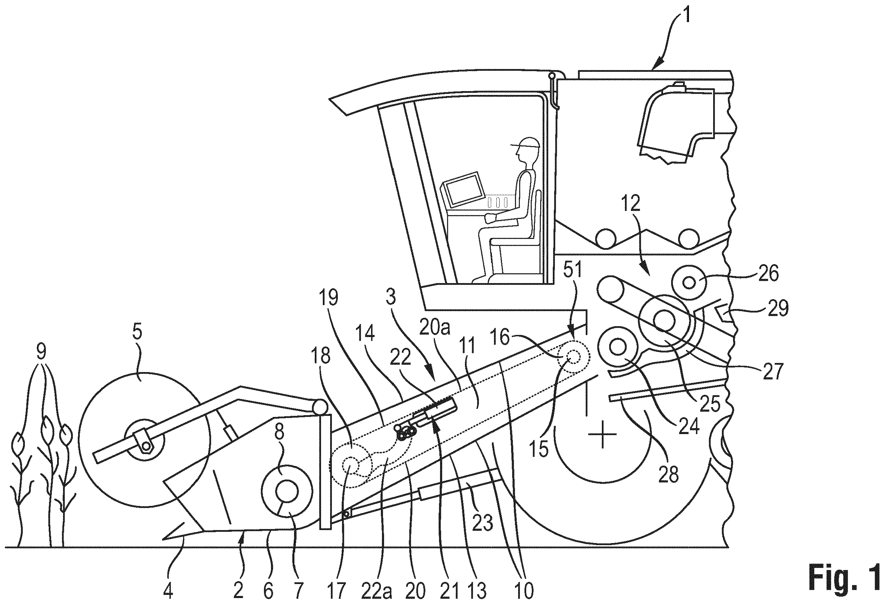

In der Figur 1 ist mit 1 eine als selbstfahrender Mähdrescher ausgebildete Erntemaschine bezeichnet, die frontseitig einen als Getreide- und Rapsschneidwerk ausgebildeten Erntevorsatz 2 aufweist. Dieser Erntevorsatz 2 ist mittels nicht näher dargestellter Kuppelelemente mit einem Schrägförderer 3 verbunden und weist in seiner Arbeitsrichtung einen Mähbalken 4 sowie eine gegenüber dem Erntevorsatz 2 heb- und senkbare Haspel 5 auf. An den Mähbalken 4 schließt sich eine Schneidwerksmulde 6 an, innerhalb welcher ein Querförderer 7, der mit zwei gegenläufig ausgebildeten Förderschnecken 8 versehen ist, angeordnet ist. Ein in der Figur 1 dargestelltes Halmgut 9 wird von der Haspel 5 erfasst, sodann vom Mähbalken 4 bodennah abgeschnitten und mittels der Haspel 5 in Richtung des Querförderers 7 gefördert, woraufhin die entsprechende Förderschnecke 8 des Querförderers 7 das Halmgut 9 über eine nicht näher dargestellte, in einer Rückwand der Schneidwerksmulde 6 vorgesehene Eintrittsöffnung in den Schrägförderer 3 fördert.

Der Schrägförderer 3 weist ein Schrägförderergehäuse 10 auf, welches, im Querschnitt gesehen, einen rechteckig ausgebildeten Förderkanal 11 bildet. Wie aus der Figur 1 hervorgeht, verengt sich dieser Förderkanal 11, ausgehend vom Erntevorsatz 2 in Richtung einer nachfolgenden Dresch- und Trenneinrichtung 12. Dabei ist zwar die Breite des Förderkanals 11 konstant, aber dessen Abstand zwischen einer Bodenwand 13 und einer oberen Wand 14 verringert sich stetig in Richtung der Dresch- und Trenneinrichtung 12. Im Schrägförderergehäuse 10 ist am Ende des Förderkanals 11, das der Dresch- und Trenneinrichtung 12 zugewandt ist, eine Antriebswelle 15 drehbar gelagert, mit der ein Antriebsrad 16 drehfest verbunden ist. Weiterhin befindet sich am gegenüberliegenden Ende des Förderkanals 11, das dem Erntevorsatz 2 zugewandt ist, eine Umlenkwelle 17, die ebenfalls im Schrägförderergehäuse 10 drehbar gelagert ist und die ein Umlenkrad 18 aufnimmt. Zwischen dem Antriebsrad 16 und dem Umlenkrad 18 befindet sich ein Treibriemen 19, der im Bereich der Bodenwand 13 ein Zugtrum 20 und im Bereich der oberen Wand 14 ein Lostrum 20a bildet.

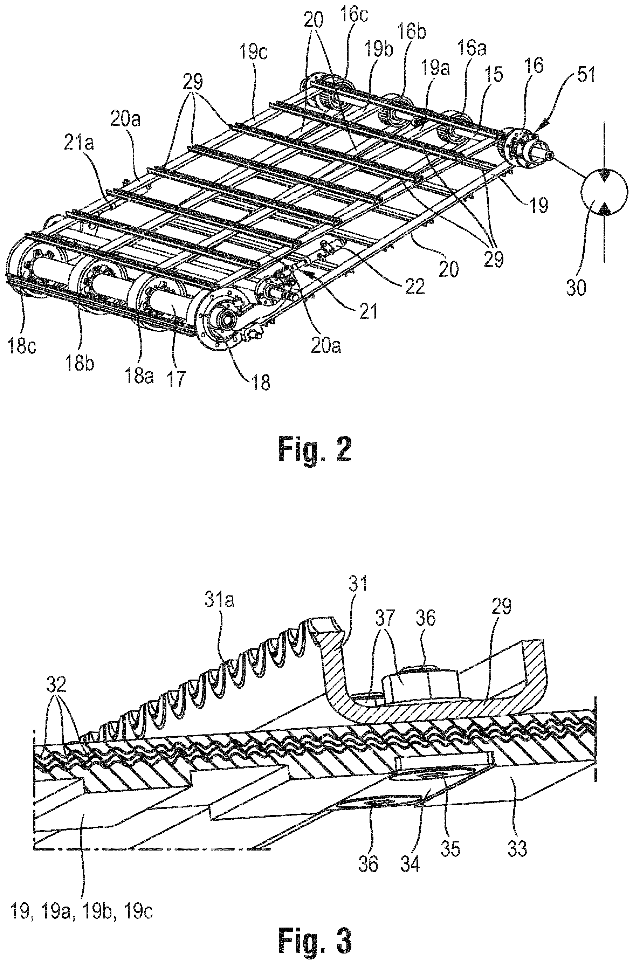

Wie nachfolgend noch im Zusammenhang mit der Figur 2 erläutert werden wird, sind auf der Antriebswelle 15 mehrere Antriebsräder 16, 16a, 16b und 16c sowie auf der Umlenkwelle 17 mehrere Umlenkräder 18, 18a, 18b und 18c angeordnet. Auch diese weiteren Umlenkräder 18a bis 18c sowie die Antriebsräder 16a bis 16c nehmen ihrerseits ebenfalls Treibriemen 19a bis 19c auf. Zur Veränderung einer Riemenspannung des in Figur 1 gezeigten Treibriemens 19 ist beidseitig des Schrägförderergehäuses 10 jeweils eine Spanneinrichtung vorgesehen, von denen in der Darstellung nur die Spanneinrichtung 21 sichtbar ist. Von dieser werden die Treibriemen 19, 19a, 19b und 19c im Bereich der Umlenkräder 18, 18a, 18b und 18c (siehe Figur 2) gespannt. Die Spanneinrichtung 21 weist zu diesem Zweck einen druckbeaufschlagbaren Hydraulikzylinder 22 auf. Dieser steht mit einem an der Umlenkwelle 17 verschwenkbaren Spannschuh 22a in Verbindung.

Das Schrägförderergehäuse 10 ist im Bereich der Antriebswelle 15 schwenkbar an einem Gestell der selbstfahrenden Erntemaschine 1 geführt und kann daher über einen Hubzylinder 23 gegenüber diesem angehoben oder abgesenkt werden. Die Dresch- und Trenneinrichtung 12 weist im vorliegenden Fall eine Vorbeschleunigungstrommel 24, eine Dreschtrommel 25 und eine Strohwendetrommel 26 auf. Ferner ist Bestandteil der Dresch- und Trenneinrichtung 12 ein Dreschkorb 27, unterhalb welchem sich ein Vorbereitungsboden 28 in Richtung nicht näher dargestellter Siebe erstreckt. An die Dresch- und Trenneinrichtung 12 schließt sich in Förderrichtung der ausgedroschenen Halme eine Nachbereitungseinrichtung 29 zur Restkornabscheidung an.

Wie bereits zuvor erwähnt, zeigt die Figur 2 Förderelemente des Schrägförderers 3 ohne das diese umgebende Schrägförderergehäuse 10. Dabei sind, wie der Figur 2 entnommen werden kann, auf der Antriebswelle 15, die im Gegenuhrzeigersinn angetrieben wird und somit über die Antriebsräder 16, 16a, 16b und 16c auf den jeweiligen unteren Abschnitt der entsprechenden Treibriemen 19, 19a, 19b und 19c, der jeweils als Zugtrum 20 wirkt, eine Zugkraft ausübt. Mit Abstand zur Antriebswelle 15 ist parallel zu dieser die Umlenkwelle 17 angeordnet, auf der die Umlenkräder 18, 18a, 18b und 18c befestigt sind. Weiterhin befinden sich im Bereich der Enden der Umlenkwelle 17 jeweils die Spanneinrichtung 21 sowie eine weitere Spanneinrichtung 21 a. In der Darstellung der Anordnung ist sichtbar, dass mit der Spanneinrichtung 21 der Hydraulikzylinder 22 zusammenwirkt. Eine entsprechende Anordnung eines Hydraulikzylinders soll auch am gegenüberliegenden Ende der Umlenkwelle 17 vorgesehen sein. Die beiden Spanneinrichtungen 21 und 21a weisen außerdem Spannschuhe 22a auf, die auf der Umlenkwelle 17 verschwenkbar angeordnet sind und auf Laufflächen der Treibriemen 19, 19a, 19b und 19c wirken. Natürlich kann auch die Umlenkwelle 17 zum Spannen der Treibriemen 19, 19a, 19b und 19c verschoben werden.

Weiterhin geht aus der Figur 2 hervor, dass die Treibriemen 19, 19a, 19b und 19c über zueinander beabstandete Förderleisten 29 miteinander verbunden sind. In Verbindung mit der Darstellung nach der Figur 1 wird deutlich, dass diese Förderleisten 29 entlang der Bodenwand 13 des Schrägförderergehäuses 10 geführt werden und dabei das Halmgut 9 entlang der Bodenwand 13 in Richtung der Dresch- und Trenneinrichtung 12 fördern. Somit bilden die mit Antriebsrädern 16, 16a, 16b und 16c versehene Antriebswelle 15 und die Treibriemen 19, 19a, 19b und 19c ein Antriebssystem 51 des Schrägförderers 3, das den Schrägförderer 3 primär in einer Förderrichtung antreibt. Die Antriebswelle 15 kann dabei von einem in beiden Drehrichtungen antreibbaren Hydromotor 30 angetrieben werden, also auch in einem Reversierbetrieb, in welchem aus dem Inneren des Schrägfördergehäuses 10 Verstopfungen, an den Wellen 15 und/oder 17 aufgewickeltes Halmgut oder Steine bzw. Fremdkörper entfernt werden können.

In der Figur 3 ist ein Abschnitt eines der Treibriemen 19, 19a, 19b und 19c dargestellt, der eine der Förderleisten 29 aufnimmt. Diese Förderleiste 29 weist eine U-förmige Kontur auf, wobei an einem in Förderrichtung gerichteten Schenkel 31 eine Mitnahmeprofilierung 31 a ausgebildet ist. Der Treibriemen 19, 19a, 19b und 19c ist als Glattriemen mit Gewebeeinlagen 32 ausgebildet, wobei eine Lauffläche 33 dieses Glattriemens jeweils in Bereichen, in denen die Förderleisten 29 befestigt sind, mit Nuten 34 versehen ist. Wie aus der Darstellung hervorgeht, ist in die entsprechende Nut 34 ein Arretierblech 35 eingelegt, und es sind Befestigungsschrauben 36 durch dieses Arretierblech 35 hindurchgeführt und andererseits des Treibriemens 19, 19a, 19b und 19c mittels Muttern 37 an der Förderleiste fixiert.

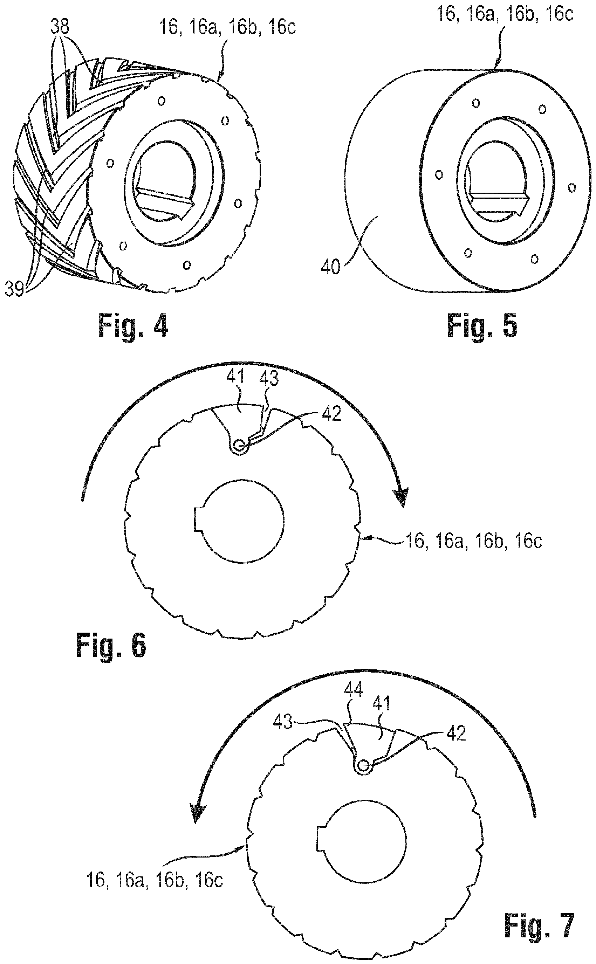

Die weitere Figur 4 zeigt eine Ausbildung des Antriebsrades 16, 16a, 16b und 16c, das an seiner Außenmantelfläche mit einer V-förmigen Profilierung 38 versehen ist. In Förderrichtung des Schrägförderers 3 soll dieses Antriebsrad nach der Figur 4 in Richtung der Spitzen der V-förmigen Profilierung 38 bewegt werden. Diese V-förmige Profilierung weist V-förmige Nuten 39 auf, die nur mit geringer Tiefe ausgebildet sind. Alternativ dazu kann gemäß Figur 5 das Antriebsrad 16, 16a, 16b und 16c auch mit einer glatt ausgebildeten Außenmantelfläche 40 versehen sein. Neben der in der Figur 4 dargestellten V-förmigen Profilierung kann diese auch als in der Außenmantelfläche des Antriebsrades 16, 16a, 16b und 16c durch in axialer Richtung verlaufende Nuten hergestellt sein, wobei auch diese Nuten mit einer geringen Tiefe ausgebildet sein sollen.

Weiterhin geht aus den Figuren 6 und 7 eine erfindungsgemäße Ausbildung des Antriebsrades 16, 16a, 16b und 16c hervor, wobei dieses ebenfalls an der Außenmantelfläche profilierte Antriebsrad 16, 16a, 16b und 16c einen als Klinke 41 ausgebildeten Mitnehmer aufweist. Diese Klinke 41 ist über einen Bolzen 42 schwenkbar am Antriebsrad 16, 16a, 16b und 16c geführt und befindet sich dabei vorzugsweise in einer radialen Ausnehmung 43 am Umfang des Antriebsrades 16, 16a, 16b und 16c. In der Figur 6 liegt die Klinke 41 völlig innerhalb der radialen Erstreckung des profilierten Antriebsrades 16, 16a, 16b und 16c.

Aufgrund der Anlenkung der Klinke 41 durch den Bolzen 42, die außermittig vorgesehen ist, kann die Klinke 41 bei einer Umkehr der Drehrichtung, wie sie in Figur 7 dargestellt ist, eine Schwenkbewegung ausführen, die bewirkt, dass eine Klinkenspitze 44 die Außenmantelfläche des Antriebsrades 16, 16a, 16b und 16c radial überragt. Diese Klinkenspitze 44 greift somit im Reversierbetrieb zur Erhöhung des vom jeweiligen Antriebsrad 16, 16a, 16b und 16c auf den entsprechenden Treibriemen 19, 19a, 19b und 19c in dessen Lauffläche 33 ein. Somit kann zur Beseitigung einer Verstopfung im Inneren des Förderkanals 11 des Schrägförderers 3 die aus den Treibriemen 19, 19a, 19b und 19c sowie den Förderleisten 29 bestehende Einheit in entgegengesetzter Richtung angetrieben werden, ohne dass die Antriebsräder 16, 16a, 16b und 16c an den Laufflächen 33 der Treibriemen 19, 19a, 19b und 19c durchrutschen.

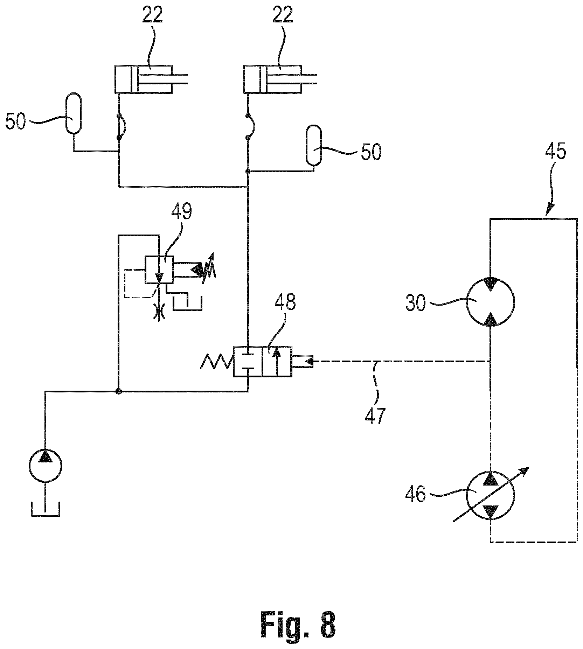

Schließlich ist in der Figur 8 eine weitere erfindungsgemäße Lösung dargestellt, bei der, wie bereits dargelegt, im Reversierbetrieb eine Erhöhung der Riemenspannung erzielt werden soll. In der Figur 8 sind die Hubhydraulikzylinder 22 dargestellt, mittels welcher die entsprechenden in den Figuren 1 und 2 dargestellten Spanneinrichtungen 21 und 21 a betätigt werden. Weiterhin ist der zum Antrieb der Antriebswelle 15 dienende Hydromotor 30 dargestellt, der in beiden Drehrichtungen antreibbar ist und im Rahmen eines hydrostatischen Antriebssystems 45 mit einer Verstellpumpe 46 in Verbindung steht. Wie aus der Darstellung hervorgeht, wird über eine Sensorleitung 47 dann ein Impuls auf ein 2/2-Wegeventil 48 übertragen, wenn im hydrostatischen Antriebssystem 45 aufgrund einer Verstopfung des Förderkanals 11 ein Reversierbetrieb erfolgt. Dieser Impuls führt dazu, dass über das 2/2-Wegeventil 48 die beiden Hydraulikzylinder 22 mit einem höheren Druck beaufschlagt werden, so dass für diese Phase an der Spanneinrichtung 21 beziehungsweise 21 a eine höhere Spannkraft eingestellt wird. Dabei ist innerhalb der Druckversorgung der Hydraulikzylinder 22 ein Druckbegrenzungsventil 49 vorgesehen. Zur hydraulischen Vorspannung der Hydraulikzylinder 22 sind Speicher 50 vorgesehen.

Aus der Figur 8 wird in Verbindung mit den Figuren 1 und 2 deutlich, dass mittels einer einfach aufgebauten hydraulischen Steuereinrichtung während eines Reversierbetriebes eine Erhöhung der Riemenspannkraft vorgenommen werden kann.

### Bezugszeichenliste

1 Selbstfahrende Erntemaschine
2 Erntevorsatz
3 Schrägförderer
4 Mähbalken
5 Haspel
6 Schneidwerksmulde
7 Querförderer
8 Förderschnecken
9 Halmgut
10 Schrägförderergehäuse
11 Förderkanal
12 Dresch- und Trenneinrichtung
13 Bodenwand von 10
14 obere Wand von 10
15 Antriebswelle
16 Antriebsrad
16a Antriebsrad
16b Antriebsrad
16c Antriebsrad
17 Umlenkwelle
18 Umlenkrad
18a Umlenkrad
18b Umlenkrad
18c Umlenkrad
19 Treibriemen
19a Treibriemen
19b Treibriemen
19c Treibriemen
20 Zugtrum
20a Lostrum
21 Spanneinrichtung
21 a Spanneinrichtung
22 Hydraulikzylinder
22a Spannschuh
23 Hubzylinder
24 Vorbeschleunigungstrommel
25 Dreschtrommel
26 Strohwendetrommel
27 Dreschkorb
28 Vorbereitungsboden
29 Förderleisten
30 Hydromotor
31 Schenkel von 29
31 a Mitnahmeprofilierung
32 Gewebeeinlage
33 Lauffläche
34 Nut
35 Arretierblech
36 Befestigungsschrauben
37 Muttern
38 V-förmige Profilierung
39 V-förmige Nuten
40 Außenmantelfläche
41 Klinke
42 Bolzen
43 radiale Ausnehmung
44 Klinkenspitze
45 hydrostatisches Antriebssystem
46 Verstellpumpe
47 Sensorleitung
48 2/2-Wegeventil
49 Druckbegrenzungsventil
50 Druckspeicher
51 Antriebssystem

## Patentansprüche

1. Schrägförderer (3) für eine Erntemaschine (1) mit zumindest zwei endlos ausgebildeten, parallel zueinander verlaufenden Treibriemen (19, 19a, 19b und 19c), die zumindest zwei zueinander beabstandete Wellen (15 und 17) umschlingen, die in einem Schrägförderergehäuse (10) des Schrägförderers (3) drehbar gelagert sind, wobei zwischen den Treibriemen (19, 19a, 19b und 19c) parallel zu den Wellen (15 und 17) verlaufende an jedem der Treibriemen (19, 19a, 19b und 19c) befestigte Förderleisten (29) angeordnet sind, wobei die eine Welle als Antriebswelle (15) ausgebildet und für jeden der Treibriemen (19, 19a, 19b und 19c) mit Antriebsrädern (16, 16a, 16b und 16c) versehen ist, wobei die Antriebswelle (15) mit den Antriebsrädern (16, 16a, 16b und 16c) und die Treibriemen (19, 19a, 19b und 19c) gemeinsam ein Antriebssystem (51) des Schrägförderers (3) bilden, das den Schrägförderer (3) in einer Förderrichtung antreibt und ein Antriebsdrehmoment auf die zumindest zwei Treibriemen (19, 19a, 19b und 19c) überträgt, **dadurch gekennzeichnet, dass** das Antriebssystem (51) in einen Reversierbetrieb umsteuerbar ist und dass der Schrägförderer (3) eine Einrichtung zur Erhöhung des von den Antriebsrädern (16, 16a, 16b und 16c) auf die Treibriemen (19, 19a, 19b und 19c) übertragbaren Antriebsdrehmomentes umfasst, die im Reversierbetrieb aktivierbar ist und ein Durchrutschen des jeweiligen Treibriemens (19, 19a, 19b und 19c) an der oder den Kontaktflächen des diesem zugeordneten Antriebsrades (16, 16a, 16b und 16c) verhindert.

2. Schrägförderer nach Patentanspruch 1, **dadurch gekennzeichnet, dass** die Treibriemen (19, 19a, 19b und 19c) als Glattriemen ausgebildet sind, die von den Antriebsrädern (16, 16a, 16b und 16c) reibschlüssig angetrieben werden.

3. Schrägförderer nach Patentanspruch 1, **dadurch gekennzeichnet, dass** die Antriebsräder(16, 16a, 16b und 16c) an ihren Außenmantelflächen (40) glatt ausgebildet sind.

4. Schrägförderer nach Patentanspruch 1, **dadurch gekennzeichnet, dass** die Antriebsräder (16, 16a, 16b und 16c) an ihren Außenmantelflächen eine Profilierung aufweisen.

5. Schrägförderer nach Patentanspruch 4, **dadurch gekennzeichnet, dass** die jeweilige Außenmantelfläche mit einer V-förmigen Profilierung (38) versehen ist.

6. Schrägförderer nach Patentanspruch 1, **dadurch gekennzeichnet, dass** die Einrichtung zur Erhöhung des übertragbaren Antriebsdrehmoments als im Reversierbetrieb aktivierbare Mitnehmer ausgebildet ist,

7. Schrägförderer nach Patentanspruch 6, **dadurch gekennzeichnet, dass** die Mitnehmer als um einen Anlenkpunkt schwenkbare Klinken (41) ausgebildet sind, deren Lage sich im Reversierbetrieb derart verändert, dass sie abschnittsweise über den Außenumfang des Antriebsrades (16, 16a, 16b und 16c) vorstehen.

8. Schrägförderer nach Patentanspruch 1, **dadurch gekennzeichnet, dass** die Einrichtung zur Erhöhung des übertragbaren Antriebsdrehmoments im Reversierbetrieb als Spanneinrichtung (21, 21 a) ausgebildet ist, mit der die Riemenspannung im Reversierbetrieb gegenüber dem Betrieb in Förderrichtung erhöht wird.

9. Schrägförderer nach Patentanspruch 1, **dadurch gekennzeichnet, dass** die Antriebswelle (15) über einen Hydromotor (30) eines hydrostatischen Antriebes (45) angetrieben wird.

10. Schrägförderer nach Patentanspruch 1, **dadurch gekennzeichnet, dass** mit den Treibriemen zusammenwirkende Riemenspanner als Einrichtung zur Erhöhung des übertragbaren Drehmoments dienen, die im Reversierbetrieb über hydraulische Riemenspanner (22) eine Erhöhung der Riemenspannung bewirken.

## Claims

1. An inclined conveyor (3) for a harvester (1) comprising at least two endless drive belts (19, 19a, 19b and 19c) which extend parallel to each other and which pass around at least two mutually spaced shafts (15 and 17) which are mounted rotatably in an inclined conveyor housing (10) of the inclined conveyor (3), wherein arranged between the drive belts (19, 19a, 19b and 19c) are conveyor bars (29) which extend parallel to the shafts (15 and 17) and which are fixed to each of the drive belts (19, 19a, 19b and 19c), wherein the one shaft is in the form of a drive shaft (15) and for each of the drive belts (19, 19a, 19b and 19c) is provided with drive wheels (16, 16a, 16b and 16c), wherein the drive shaft (15) with the drive wheels (16, 16a, 16b and 16c) and the drive belts (19, 19a, 19b and 19c) jointly form a drive system (51) of the inclined conveyor (3) which drives the inclined conveyor (3) in a conveyor direction and transmits a drive torque to the at least two drive belts (19, 19a, 19b and 19c), **characterised in that** the drive system (51) can be switched over into a reversing mode and that the inclined conveyor (3) includes a device for increasing the drive torque which can be transmitted by the drive wheels (16, 16a, 16b and 16c) to the drive belts (19, 19a, 19b and 19c), which device can be activated in the reversing mode and prevents slippage of the respective drive belts (19, 19a, 19b and 19c) at the contact surface or surfaces of the drive wheel (16, 16a, 16b and 16c) associated therewith.

2. An inclined conveyor according to claim 1 **characterised in that** the drive belts (19, 19a, 19b and 19c) are in the form of smooth belts which are driven in frictional engagement by the drive wheels (16, 16a, 16b and 16c).

3. An inclined conveyor according to claim 1 **characterised in that** the drive wheels (16, 16a, 16b and 16c) are smooth at their outside peripheral surfaces (40).

4. An inclined conveyor according to claim 1 **characterised in that** the drive wheels (16, 16a, 16b and 16c) have a profiling at their outside peripheral surfaces.

5. An inclined conveyor according to claim 4 **characterised in that** the respective outside peripheral surface is provided with a V-shaped profiling (38).

6. An inclined conveyor according to claim 1 **characterised in that** the device for increasing the drive torque which can be transmitted is in the form of entrainment members which can be activated in the reversing mode.

7. An inclined conveyor according to claim 6 **characterised in that** the entrainment members are in the form of pawls (41) which are pivotable about a pivot mounting point and whose position in the reversing mode is altered in such a way that they project portion-wise beyond the outside periphery of the drive wheel (16, 16a, 16b and 16c).

8. An inclined conveyor according to claim 1 **characterised in that** the device for increasing the drive torque which can be transmitted in the reversing mode is in the form of a tensioning device (21, 21a) with which the belt tension is increased in the reversing mode in comparison with the mode in the conveyor direction.

9. An inclined conveyor according to claim 1 **characterised in that** the drive shaft (15) is driven by way of a hydraulic motor (30) of a hydrostatic drive (45).

10. An inclined conveyor according to claim 1 **characterised in that** belt tensioners cooperating with the drive belts serve as a device for increasing the torque which can be transmitted, which in the reversing mode cause an increase in the belt tension by way of hydraulic belt tensioners (22).

## Revendications

1. Convoyeur incliné (3) pour une machine de récolte (1), comprenant au moins deux courroies d'entraînement conçues sans fin et s'étendant parallèlement les unes aux autres (19, 19a, 19b et 19c), lesquelles entourent au moins deux arbres distants l'un de l'autre (15 et 17) qui sont montés tournants dans un carter de convoyeur incliné (10) du convoyeur incliné (3), entre les courroies d'entraînement (19, 19a, 19b et 19c) étant disposées des barrettes de convoyeur (29) qui s'étendent parallèlement aux arbres (15 et 17) et sont fixées à chacune des courroies d'entraînement (19, 19a, 19b et 19c), l'un des arbres étant conformé en arbre d'entraînement (15) et étant muni de roues d'entraînement (16, 16a, 16b et 16c) pour chacune des courroies d'entraînement (19, 19a, 19b et 19c), l'arbre d'entraînement (15) muni des roues d'entraînement (16, 16a, 16b et 16c) et les courroies d'entraînement (19, 19a, 19b et 19c) formant ensemble un système d'entraînement (51) du convoyeur incliné (3), lequel entraîne le convoyeur incliné (3) dans une direction de convoyage et transmet un couple d'entraînement aux au moins deux courroies d'entraînement (19, 19a, 19b et 19c), **caractérisé en ce que** le système d'entraînement (51) peut être basculé en mode inversé, et **en ce que** le convoyeur incliné (3) comprend un dispositif qui est destiné à augmenter le couple d'entraînement transmissible par les roues d'entraînement (16, 16a, 16b et 16c) aux courroies d'entraînement (19, 19a, 19b et 19c) et qui est activable en mode inversé et empêche un patinage de la courroie d'entraînement correspondante (19, 19a, 19b et 19c) sur la ou les surfaces de contact de la roue d'entraînement (16, 16a, 16b et 16c) associée à celle-ci.

2. Convoyeur incliné selon la revendication 1, **caractérisé en ce que** les courroies d'entraînement (19, 19a, 19b et 19c) sont conformées en courroies lisses qui sont entraînées, par liaison par friction, par les roues d'entraînement (16, 16a, 16b et 16c).

3. Convoyeur incliné selon la revendication 1, **caractérisé en ce que** les roues d'entraînement (16, 16a, 16b et 16c) sont de conception lisse sur leur surface latérale extérieure (40).

4. Convoyeur incliné selon la revendication 1, **caractérisé en ce que** les roues d'entraînement (16, 16a, 16b et 16c) comportent un profilage sur leur surfaces latérales extérieures.

5. Convoyeur incliné selon la revendication 4, **caractérisé en ce que** la surface latérale extérieure respective est pourvue d'un profilage en forme de V (38).

6. Convoyeur incliné selon la revendication 1, **caractérisé en ce que** le dispositif d'augmentation du couple d'entraînement transmissible est conformé en moyens entraîneurs activables en mode inversé.

7. Convoyeur incliné selon la revendication 6, **caractérisé en ce que** les moyens entraîneurs sont conformés en cliquets (41) qui sont pivotants autour d'un point d'articulation et dont la position en mode inversé change de façon qu'ils fassent saillie par endroits au-dessus de la périphérie extérieure de la roue d'entraînement (16, 16a, 16b et 16c).

8. Convoyeur incliné selon la revendication 1, **caractérisé en ce que** le dispositif d'augmentation du couple d'entraînement transmissible est conformé, en mode inversé, en dispositif de serrage (21, 21a) permettant, en mode inversé, d'augmenter la tension de la courroie par rapport au mode en direction de convoyage.

9. Convoyeur incliné selon la revendication 1, **caractérisé en ce que** l'arbre d'entraînement (15) est entraîné par l'intermédiaire d'un moteur hydraulique (30) d'un entraînement hydrostatique (45).

10. Convoyeur incliné selon la revendication 1, **caractérisé en ce que** des tendeurs de courroie coopérant avec les courroies d'entraînement servent de dispositif d'augmentation du couple transmissible et, en mode inversé, provoquent une augmentation de la tension de courroies par l'intermédiaire de tendeurs hydrauliques de courroies (22).
